# FASCICULE DE BREVET EUROPEEN

(11) **EP 0 928 589 B1**
(45) Date de publication et mention de la délivrance du brevet: **07.03.2001**
(21) Numéro de dépôt: 98403346.4
(22) Date de dépôt: 31.12.1998
(51) Int. Cl.: A47J 27/21, A47J 27/10

(54) **Appareil de cuisson à détection d'eau**
Kochgerät mit Wasserdetektierungssystem
Cooking utensil with water detection

(30) Priorité: 09.01.1998 FR 9800171
(43) Date de publication de la demande: 14.07.1999
(73) Titulaire: SEB S.A., 69130 Ecully (FR)
(72) Inventeur: Betend-Bon, Alain, 74000 Annecy (FR)
(74) Mandataire: Keib, Gérard

(56) Documents cités:
- FR-A- 2 561 893
- FR-A- 2 670 274
- GB-A- 1 408 387
- GB-A- 1 439 951
- GB-A- 1 559 076

## Description

La présente invention concerne un appareil de cuisson, tel qu'un barbecue électrique. Un appareil électrique selon le préambule de la revendication 1 est connu du brevet EB-A-1 408 387.

Un autre barbecue électrique est connu du brevet FR 2 670 274 au nom de la Demanderesse.

Ce barbecue comprend une cuve de support dans laquelle est disposée une résistance électrique chauffante, sous une grille qui est destinée à recevoir les aliments à cuire.

Il est connu de placer de l'eau dans la cuve de support afin de maintenir le fond de la cuve de l'appareil à une température pas trop élevée.

Cependant, pour une sécurité optimale de l'appareil, il est nécessaire qu'une quantité suffisante d'eau soit présente dans la cuve de support.

En outre, lorsqu'un réflecteur est disposé dans la cuve, sous la résistance électrique, afin d'éviter les déperditions de chaleur vers le fond de la cuve, il est connu de placer de l'eau dans la cuve de support, le réflecteur flottant ainsi sur l'eau.

Cet apport d'eau permet d'éviter la surchauffe du réflecteur, afin de limiter la carbonisation des graisses ou jus de cuisson qui tombent sur le réflecteur.

La présente invention permet d'accroître la sécurité d'un appareil de cuisson du type décrit ci-dessus, notamment à réflecteur flottant.

L'appareil de cuisson tel qu'un barbecue électrique, visé par l'invention comporte une cuve de support et une résistance électrique chauffante disposée sur la cuve de support, la cuve de support étant adaptée à contenir de l'eau.

En plus, l'appareil comprend un détecteur du niveau d'un flotteur flottant sur l'eau dans la cuve de support, le détecteur étant adapté à commander l'arrêt de l'alimentation en courant électrique de la résistance si le niveau d'eau dans le fond de la cuve de support est inférieur à une valeur de seuil prédéterminée.

Selon l'invention, le flotteur est un réflecteur logé dans la cuve, sous la résistance électrique, et adapté à flotter sur de l'eau contenue dans le fond de la cuve.

Grâce au détecteur, le fonctionnement de la résistance électrique est automatiquement interrompu ou ne peut être obtenu si une quantité minimale d'eau n'est pas présente dans le fond de la cuve de support.

De préférence, le détecteur est adapté à être déplacé par le flotteur entre une position d'arrêt et une position de marche dans lesquelles respectivement le détecteur commande ou non l'arrêt de l'alimentation en courant électrique de la résistance.

La détection du flotteur est donc réalisée mécaniquement, en profitant de la poussée exercée par l'eau sur le flotteur.

De préférence, des moyens de rappel élastique sont adaptés à maintenir le détecteur dans la position d'arrêt.

Ces moyens de rappel élastique permettent de s'assurer qu'une poussée suffisante, exercée par l'eau sur le flotteur, existe pour déplacer le détecteur contre la force de rappel élastique et par conséquent qu'une quantité minimale d'eau est présente dans le fond de la cuve pour obtenir cette force de pression sur le flotteur.

Le détecteur permet ainsi de s'assurer qu'une quantité suffisante d'eau est présente pour éviter la surchauffe du réflecteur et que ce dernier soit à une distance adéquate de la résistance.

En effet, si le remplissage en eau est insuffisant ou si une évaporation trop importante de l'eau se produit, l'épaisseur d'eau séparant le réflecteur du fond de la cuve dévient inférieure à la valeur de seuil, le réflecteur flottant descendant alors vers le fond de la cuve de support.

D'autres particularités et avantages de l'invention apparaîtront encore dans la description ci-après.

Aux dessins annexés, donnés à titre d'exemples non limitatifs :
- la figure 1 est une vue en coupe transversale d'un appareil de cuisson conforme à un premier mode de réalisation de l'invention en position de marche ;
- la figure 2 est une vue analogue à la figure 1, l'appareil de cuisson étant en position d'arrêt ;
- la figure 3 est une vue en coupe transversale d'un appareil de cuisson conforme à un second mode de réalisation de l'invention en position de marche ; et
- la figure 4 est une vue analogue à la figure 3, l'appareil de cuisson étant en position d'arrêt.

En référence aux figures, un appareil de cuisson, tel qu'un barbecue électrique, comporte une cuve de support 1 et une résistance électrique chauffante 2 disposée sur la cuve de support 1.

Une grille 12 est placée sur la cuve de support 1, au-dessus de la résistance 2, pour disposer les aliments à griller.

Conformément à l'invention, un détecteur 5 du niveau d'un flotteur 3, flottant sur l'eau 4 dans la cuve de support 1, est adapté à commander l'arrêt de l'alimentation en courant électrique de la résistance 2 si la distance séparant le flotteur 3 du fond de la cuve de support 1 est inférieure à une valeur de seuil prédéterminée.

Le flotteur 3 est fixé sur un bord de la cuve de support 1, en un point distant du fond d'une hauteur égale à la valeur de seuil.

Dans cet exemple, le détecteur 5 comprend un levier 5 disposé en regard d'un contacteur 7 d'un interrupteur électrique 6 connecté à la résistance électrique 2. Le levier 5 comporte une extrémité libre 5a s'étendant dans la cuve 1 et adaptée à être déplacée par le flotteur 3 entre une position d'arrêt et une position de marche dans lesquelles respectivement le levier 5 active ou non le contacteur 7 de l'interrupteur 6.

Ainsi, l'extrémité libre 5a du détecteur 5 est déplacée par le flotteur 3 entre une position d'arrêt et une position de marche dans lesquelles respectivement le détecteur 5 commande ou non l'arrêt de l'alimentation en courant électrique de la résistance 2.

Le levier 5 est constitué d'une lame élastique maintenue déformée dans la position de marche par le flotteur 3.

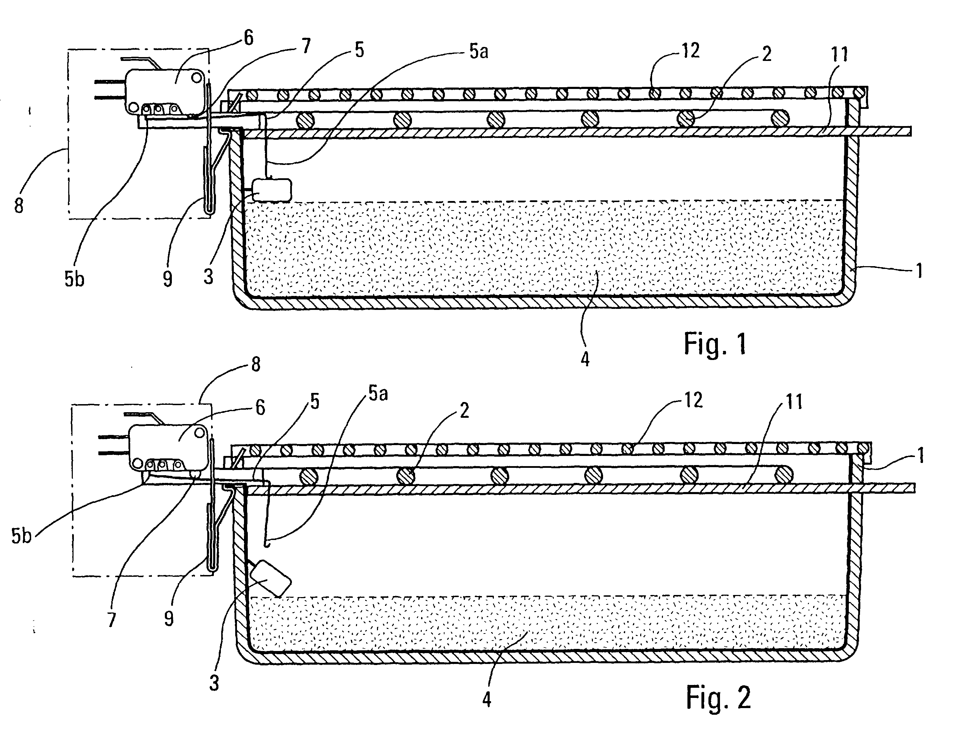

La force de rappel élastique est ainsi adaptée à maintenir le levier 5 dans une position d'arrêt illustrée à la figure 2.

Ce levier 5 pivote de préférence autour d'une extrémité fixe 5b entre la position d'arrêt dans laquelle le contacteur 7 est en saillie et une position de marche dans laquelle le levier 5 est pivoté, grâce à la force exercée par le flotteur 3 sur son extrémité libre Sa, de manière à enfoncer le contacteur 7 et établir le passage du courant électrique entre une source de courant (non représentée) et la résistance électrique 2.

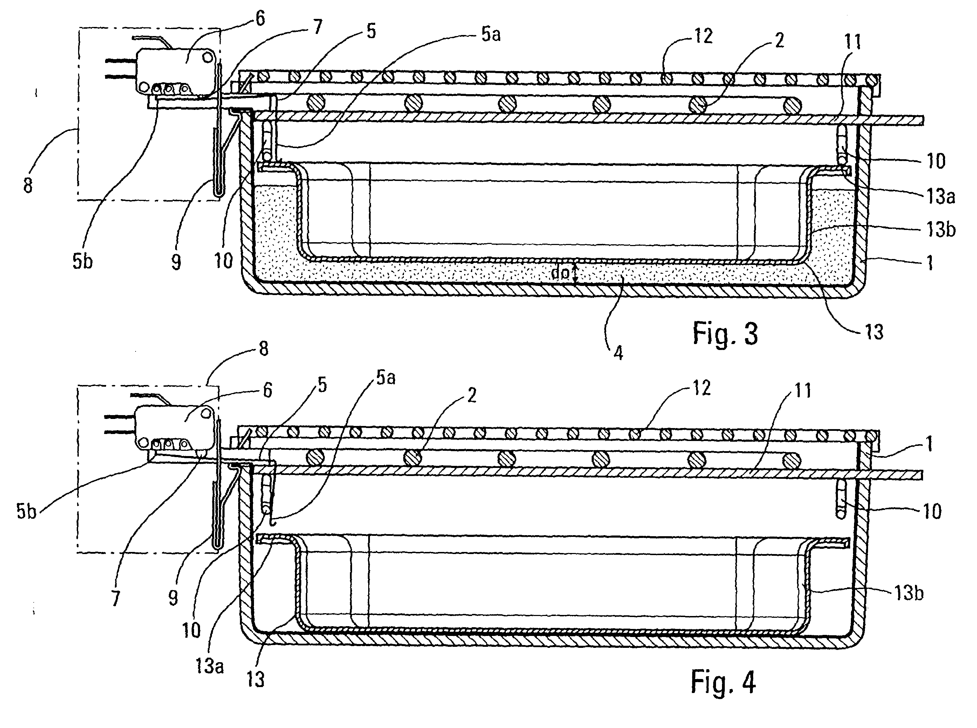

Comme illustré aux figures 3 et 4 illustrant un second mode de réalisation de l'invention, le flotteur est un réflecteur 13 logé dans la cuve 1 sous la résistance électrique 2 et adapté à flotter sur l'eau 4 contenue dans le fond de la cuve.

Le détecteur 5 permet de commander l'arrêt de l'alimentation en courant électrique de la résistance 2 si la distance séparant le réflecteur 13 du fond de la cuve de support 1 est inférieure à une valeur de seuil d₀.

Cette valeur de seuil d₀ peut être comprise, par exemple, entre 3 et 10 cm, de sorte que l'épaisseur d'eau séparant le réflecteur 13 du fond de la cuve 1 soit suffisante pour éviter à la fois la surchauffe du réflecteur 3 et de la cuve 1 destinée à venir en contact avec un plan de travail.

La cuve de support 5 comporte au moins une butée 10 qui est adaptée à venir en contact avec le réflecteur 13.

Ces butées 10, au nombre de quatre dans cet exemple, empêchent le réflecteur 13 de dépasser une certaine distance au-dessus du fond de la cuve 1.

Eventuellement, la position des butées 10 sur les parois de la cuve 1 peut être réglable, afin de rapprocher plus ou moins le réflecteur 13 de la résistance chauffante 2.

De préférence, le réflecteur flottant 13 est constitué d'un récipient afin de recueillir les graisses et les jus de cuisson tombant de la grille 12.

Ce réflecteur 13 en forme de récipient comporte un rebord périphérique évasé 13a, le détecteur de niveau 5 étant adapté, par son extrémité libre Sa, à venir en contact avec le rebord périphérique 13a du réflecteur.

Dans cet exemple, le réflecteur 13 comporte un rebord 13a formé d'une aile plane périphérique s'étendant parallèlement au fond de la cuve 1 et au fond du récipient constituant le réflecteur 13.

Ce rebord 13a est adapté à déplacer le détecteur 5 et à venir en appui contre les butées 10 de la cuve 1.

Le réflecteur 13 ayant la forme d'un récipient, l'eau dans la cuve 1 s'étend sous le fond du réflecteur 13 et le long de ses parois 13b de manière à assurer un refroidissement optimal du réflecteur 13.

De préférence, l'interrupteur de sécurité 6 est logé dans un boîtier 8 solidaire de la résistance chauffante 2 qui peut être amovible afin de faciliter le nettoyage de l'appareil de cuisson.

Un crochet de maintien 9 permet de fixer de manière amovible le boîtier 8 à la cuve 1.

Ce boîtier 8 comporte une ouverture de passage à travers laquelle s'étend le détecteur 5 et son extrémité libre 5a qui, dans cet exemple, forme un angle droit avec la lame élastique du levier 5.

Lors du fonctionnement de cet appareil de cuisson, si l'eau n'est pas introduite dans la cuve, le réflecteur 13 reste au fond de la cuve 1 comme illustré à la figure 4, l'extrémité libre Sa du levier 5 n'étant pas sollicité par le réflecteur 13.

Le levier 5 reste ainsi dans sa position d'arrêt, le contacteur 7 de l'interrupteur 6 étant en saillie.

La résistance électrique ne peut pas être mise sous tension dans cette configuration.

Lorsqu'une quantité suffisante d'eau 4 est introduite dans la cuve, la poussée exercée par le réflecteur 13 sur l'extrémité libre 5a du levier 5 est suffisante pour s'opposer à la force de rappel élastique de ce dernier et maintenir le contacteur 7 enfoncé par l'intermédiaire du levier 5.

Les butées 10 empêchent le réflecteur 13 de monter au-delà d'une certaine distance au-dessus du fond de la cuve 1 et maintiennent ainsi le réflecteur 13 enfoncé dans l'eau 4 qui s'étend autour de ses parois 3b.

La résistance électrique 2 peut ainsi être alimentée en courant si l'appareil est mis sous tension et qu'aucun autre organe de sécurité n'en empêche le fonctionnement.

Dès que le niveau d'eau 4 dans la cuve de support 1 est insuffisant, le fonctionnement de l'appareil de cuisson est interrompu.

Ainsi, dans la réalisation des figures 3 et 4, un autre flotteur 3 peut être fixé sur le bord de la cuve 1, l'appareil de cuisson pouvant fonctionner avec ou sans réflecteur et le détecteur étant alors sollicité respectivement par le réflecteur ou par le flotteur.

Bien entendu, de nombreuses modifications peuvent être apportées à l'exemple décrit ci-dessus, sans sortir du cadre de l'invention.

## Revendications

1. Appareil de cuisson, tel qu'un barbecue électrique, comportant une cuve de support (1) et une résistance électrique chauffante (2) disposée sur. la cuve de support (1), la cuve de support (1) étant adaptée à contenir de l'eau (4), comprenant un détecteur (5) du niveau d'un flotteur (3, 13) flottant sur l'eau (4) dans la cuve de support (1), le détecteur (5) étant adapté à commander l'arrêt de l'alimentation en courant électrique de la résistance (2) si le niveau d'eau dans le fond de la cuve de support (1) est inférieur à une valeur de seuil prédéterminée, caractérisé en ce que le flotteur est un réflecteur (13) logé dans la cuve, sous la résistance électrique (2), et adapté à flotter sur de l'eau (4) contenue dans le fond de la cuve (1).

2. Appareil de ' cuisson conforme à la revendication 1, caractérisé en ce que le détecteur (5) est adapté à être déplacé par le flotteur (3, 13) entre une position d'arrêt et une position de marche dans lesquelles respectivement le détecteur (5) commande ou non l'arrêt de l'alimentation en courant électrique de la résistance (2).

3. Appareil de cuisson conforme à la revendication 2, caractérisé en ce que des moyens de rappel élastique sont adaptés à maintenir le détecteur (5) dans la position d'arrêt.

4. Appareil de cuisson conforme à l'une des revendications 2 ou 3, caractérisé en ce que le détecteur (5) comprend un levier (5) disposé en regard d'un contacteur (7) d'un interrupteur électrique (6) connecté à la résistance électrique (2), ledit levier (5)comportant une extrémité libre (5a) s'.étendant dans la cuve (1) et adaptée à être déplacée par le flotteur (3, 13) entre ladite position d'arrêt et ladite position de marche dans lesquelles respectivement le levier (5) active ou non ledit contacteur (7).

5. Appareil de cuisson conforme à la revendication 4, caractérisé en ce que le levier (5) est constitué d'une lame élastique maintenue déformée dans ladite position de marche par le flotteur (3, 13).

6. Appareil de cuisson conforme à l'une des revendications 1 à 5, caractérisé en ce que la cuve de support (5) comporte au moins une butée (10) adaptée à venir en contact avec le réflecteur (13).

7. Appareil de cuisson conforme à l'une des revendications 1 à 6, caractérisé en ce que le réflecteur flottant (13) est constitué d'un récipient.

8. Appareil de cuisson conforme à la revendication 7, caractérisé en ce que le réflecteur flottant en forme de récipient (3) comporte un rebord périphérique évasé (3a), le détecteur de niveau (5) étant adapté à venir en contact avec ledit rebord périphérique (3a).

## Claims

1. Cooking apparatus such as an electric barbecue comprising a support vessel (1) and a resistive electric heater element (2) placed on the support vessel (1), the support vessel (1) being designed to contain water (4), comprising a detector (5) for detecting the level of a float (3, 13) floating on the water (4) in the support vessel (1), the detector (5) being designed to command the shutting-off of the electrical power supply to the resistive element (2) if the water level in the bottom of the support vessel (1) is below a predetermined threshold value, characterized in that the float is a reflector (13) housed in the vessel, under the resistive electric element (2) and designed to float on the water (4) contained in the bottom of the vessel (1).

2. Cooking apparatus according to Claim 1, characterized in that the detector (5) is designed to be moved by the float (3, 13) between an "off" position and an "on" position in which positions the detector (5) respectively switches the power supply to the resistive electric element (2) on and off.

3. Cooking apparatus according to Claim 2, characterized in that elastic return means are designed to keep the detector (5) in the "off" position.

4. Cooking apparatus according to either of Claims 2 and 3, characterized in that the detector (5) comprises a lever (5) arranged facing a contact (7) of an electrical switch (6) connected to the resistive electric element (2), the said lever (5) having a free end (5a) extending into the vessel (1) and designed to be moved by the float (3, 13) between the said "off" position and the said "on" position, in which positions the lever (5) respectively activates or does not activate the said contact (7).

5. Cooking apparatus according to Claim 4, characterized in that the lever (5) consists of an elastic lead kept deformed in the said "on" position by the float (3, 13).

6. Cooking apparatus according to one of Claims 1 to 5, characterized in that the support vessel (1) comprises at least one stop (10) designed to come into contact with the reflector (13).

7. Cooking apparatus according to one of Claims 1 to 6, characterized in that the floating reflector (13) consists of a container.

8. Cooking apparatus according to Claim 7, characterized in that the floating container-shaped reflector (13) comprises a flared peripheral rim (13a), the level detector (5) being designed to come into contact with the said peripheral rim (13a).

## Patentansprüche

1. Kochvorrichtung, wie ein elektrischer Grill, welche eine Trägerwanne (1) und ein elektrisches Widerstandsheizelement (2) aufweist, das auf der Trägerwanne (1) angeordnet ist, wobei die Trägerwanne (1) angepaßt ist, Wasser (4) zu enthalten, und eine Vorrichtung zur Erfassung (5) der Höhe eines Schwimmers (3,13) umfaßt, der auf dem Wasser (4) in der Trägerwanne (1) schwimmt, wobei die Erfassungsvorrichtung (5) angepaßt ist, die Zufuhr von elektrischem Strom zum Widerstand (2) zu unterbinden, wenn der Wasserspiegel am Boden der Trägerwanne (1) unter einem vorbestimmten Schwellenwert liegt, dadurch gekennzeichnet, daß der Schwimmer ein in der Wanne, unter dem elektrischen Widerstand (2) angeordneter Reflektor (13) ist und angepaßt ist, auf dem am Boden der Wanne (1) enthaltenen Wasser (4) zu schwimmen.

2. Kochvorrichtung nach Anspruch 1, dadurch gekennzeichnet, daß die Erfassungsvorrichtung (5) angepaßt ist, durch den Schwimmer (3,13) zwischen einer Stop-Position und einer Bewegungs-Position versetzt zu werden, in denen die Erfassungsvorrichtung (5) jeweils die Zufuhr von elektrischem Strom zum Widerstand (2) unterbricht oder nicht.

3. Kochvorrichtung nach Anspruch 2, dadurch gekennzeichnet, daß elastische Rückstellungsmittel angepaßt sind, die Erfassungsvorrichtung (5) in der Stop-Position zu halten.

4. Kochvorrichtung nach einem der Ansprüche 2 oder 3, dadurch gekennzeichnet, daß die Erfassungsvorrichtung (5) einen Hebel (5) umfaßt, der gegenüber einem Schalter (7) eines elektrischen Unterbrechers (6), der mit dem elektrischen Widerstand (2) verbunden ist, angeordnet ist, wobei der Hebel (5) ein freies Ende (5a) aufweist, das sich in die Wanne (1) erstreckt und angepaßt ist, von dem Schwimmer (3,13) zwischen der Stop-Position und der Bewegungs-Position bewegt zu werden, in denen der Hebel (5) den Schalter (7) jeweils aktiviert oder nicht.

5. Kochvorrichtung nach Anspruch 4, dadurch gekennzeichnet, daß der Hebel (5) aus einer elastischen Lamelle besteht, die in der Bewegungsposition durch den Schwimmer (3,13) deformiert gehalten wird.

6. Kochvorrichtung nach einem der Ansprüche 1 bis 5, dadurch gekennzeichnet, daß die Trägerwanne (1) mindestens ein Lager (10) aufweist, daß angepaßt ist, mit dem Reflektor (13) in Kontakt zu treten.

7. Kochvorrichtung nach einem der Ansprüche 1 bis 6, dadurch gekennzeichnet, daß der schwimmende Reflektor (13) aus einem Behälter besteht.

8. Kochvorrichtung nach Anspruch 7, dadurch gekennzeichnet, daß der schwimmende Reflektor in Form eines Behälters (3) einen verbreiterten umlaufenden Vorsprung (3a) aufweist, wobei die Niveau-Erfassungsvorrichtung (5) angepaßt ist mit dem umlaufenden Vorsprung (3a) in Kontakt zu treten.
